(19) **Europäisches Patentamt / European Patent Office / Office européen des brevets**

(11) **EP 4 079 823 A1**

(12) **EUROPEAN PATENT APPLICATION**
published in accordance with Art. 153(4) EPC

(43) Date of publication:
**26.10.2022 Bulletin 2022/43**

(21) Application number: **20902494.2**

(22) Date of filing: **17.12.2020**

(51) International Patent Classification (IPC):
$C09J\ 11/08^{(2006.01)}$　　$C09J\ 133/06^{(2006.01)}$
$C09J\ 7/38^{(2018.01)}$

(52) Cooperative Patent Classification (CPC):
**C09J 7/38; C09J 11/08; C09J 133/06**

(86) International application number:
**PCT/JP2020/047202**

(87) International publication number:
**WO 2021/125278 (24.06.2021 Gazette 2021/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.12.2019　JP 2019228410**

(71) Applicant: SEKISUI CHEMICAL CO., LTD.
**530-0047 (JP)**

(72) Inventors:
• **ADACHI, Aya**
  **Mishima-gun, Osaka 618-0021 (JP)**
• **UCHIDA, Noriyuki**
  **Inukami-gun, Shiga 522-0314 (JP)**
• **WATANABE, Shigekazu**
  **Mishima-gun, Osaka 618-0021 (JP)**
• **OGATA, Yudai**
  **Mishima-gun, Osaka 618-0021 (JP)**

(74) Representative: **Cabinet Beau de Loménie**
  **158, rue de l'Université**
  **75340 Paris Cedex 07 (FR)**

(54) **ADHESIVE AGENT COMPOSITION, ADHESIVE TAPE, AFFIXING METHOD FOR ELECTRONIC DEVICE COMPONENT OR IN-VEHICLE COMPONENT, AND PRODUCTION METHOD FOR ELECTRONIC DEVICE COMPONENT OR IN-VEHICLE COMPONENT**

(57)　The present invention aims to provide an adhesive composition that can exhibit excellent adhesion to both smooth surfaces and rough surfaces. The present invention also aims to provide an adhesive tape including an adhesive layer containing the adhesive composition, as well as a method for fixing and a method for producing an electronic device component or an in-vehicle component using the adhesive tape. Provided is an adhesive composition containing an acrylic copolymer containing a structural unit derived from n-heptyl (meth)acrylate.

EP 4 079 823 A1

**Description**

TECHNICAL FIELD

The present invention relates to an adhesive composition that can exhibit excellent adhesion to both smooth surfaces and rough surfaces. The present invention also relates to an adhesive tape including an adhesive layer containing the adhesive composition, as well as a method for fixing and a method for producing an electronic device component or an in-vehicle component using the adhesive tape.

BACKGROUND ART

Adhesive tapes including adhesive-containing adhesive layers have been widely used to fix components in electronic members, vehicles, houses, and building materials (see Patent Literatures 1 to 3, for example). Specifically, for example, adhesive tapes are used to bond a cover panel for protecting a surface of a portable electronic device to a touch panel module or display panel module, or to bond a touch panel module to a display panel module.

CITATION LIST

- Patent Literature

Patent Literature 1: JP 2015-052050 A
Patent Literature 2: JP 2015-021067 A
Patent Literature 3: JP 2015-120876 A

SUMMARY OF INVENTION

- Technical problem

Acrylic adhesives containing acrylic copolymers have excellent adhesion and are widely used.
Examples of acrylic monomers constituting acrylic copolymers include alkyl (meth)acrylates such as butyl (meth)acrylate and 2-ethylhexyl (meth)acrylate. In particular, using butyl acrylate as a main component allows adhesives to exhibit excellent adhesion. However, although such adhesives have excellent adhesion to smooth surfaces, they have low conformability to irregularities and thus insufficient adhesion to rough surfaces. In contrast, using 2-ethylhexyl acrylate as a main component allows adhesives to have improved conformability to irregularities. However, such adhesives do not have sufficient adhesion to adherends in the first place, and it is difficult for such adhesives to exhibit excellent adhesion to both smooth surfaces and rough surfaces.
The present invention aims to provide an adhesive composition that can exhibit excellent adhesion to both smooth surfaces and rough surfaces (particularly, adhesion to rough surfaces higher than that of butyl (meth)acrylate adhesives and 2-ethylhexyl (meth)acrylate adhesives). The present invention also aims to provide an adhesive tape including an adhesive layer containing the adhesive composition, as well as a method for fixing and a method for producing an electronic device component or an in-vehicle component using the adhesive tape.

- Solution to problem

The present invention relates to an adhesive composition containing an acrylic copolymer containing a structural unit derived from n-heptyl (meth)acrylate.
The (meth)acrylate herein means acrylate or methacrylate, and (meth)acrylic means acrylic or methacrylic. An acrylic copolymer may be a methacrylic copolymer.
The present invention is described in detail below.
The present inventors found out that an adhesive composition containing an acrylic copolymer in which particularly n-heptyl (meth)acrylate, among various acrylic monomers constituting acrylic copolymers, is used can exhibit excellent adhesion to both smooth surfaces and rough surfaces. The inventors thus completed the present invention.
The adhesive composition of the present invention contains an acrylic copolymer containing a structural unit derived from n-heptyl (meth)acrylate. The adhesive composition of the present invention thus can exhibit excellent adhesion to both smooth surfaces and rough surfaces.
The reason for this is not clear. One possible reason is that since the n-heptyl group of n-heptyl (meth)acrylate is linear, the acrylic copolymer containing the structural unit derived from n-heptyl (meth)acrylate increases the cohesive force of the adhesive layer containing the adhesive composition of the present invention, thus increasing peel resistance. Another possible reason is that the structural unit derived from n-heptyl (meth)acrylate contained in the acrylic copolymer decreases the glass transition temperature (Tg) of the acrylic copolymer while decreasing the storage modulus at room temperature of the adhesive layer containing the adhesive composition of the present invention, thus improving the conformability of the adhesive layer to irregularities. Moreover, hydrocarbons having odd carbon numbers are less susceptible to packing of molecules than those having even carbon numbers, and tend to have low melting points. The linear n-heptyl group, having an odd carbon number, is similarly less susceptible to packing. Another possible reason is therefore that the acrylic copolymer containing the structural unit derived from n-heptyl (meth)acrylate is less susceptible to packing of side chains, and thus easily exhibits flexibility, improving the conformability to irregularities of the adhesive layer containing the adhesive composition of the present invention.

The n-heptyl (meth)acrylate of the structural unit derived from n-heptyl (meth)acrylate may consist only of a petroleum-derived material, but preferably contains a bio-derived material.

In recent years, the depletion of petroleum resources and carbon oxide emissions from the combustion of petroleum-derived products have become problematic. Thus, attempts have been made to save petroleum resources by using bio-derived materials instead of petroleum-derived materials.

From the viewpoint of saving petroleum resources, it is preferred that the n-heptyl (meth)acrylate of the structural unit derived from n-heptyl (meth)acrylate contains a bio-derived material. Also from the viewpoint of reducing carbon dioxide emissions, it is preferred that the n-heptyl (meth)acrylate of the structural unit derived from n-heptyl (meth)acrylate contains a bio-derived material because combusting bio-derived materials, which originally incorporate atmospheric carbon dioxide as they are formed, is not considered to increase the total amount of atmospheric carbon dioxide.

When the n-heptyl (meth)acrylate of the structural unit derived from n-heptyl (meth)acrylate contains a bio-derived material, the n-heptyl (meth)acrylate is preferably synthesized by esterification of (meth)acrylate and n-heptyl alcohol that is a bio-derived material.

The n-heptyl alcohol that is a bio-derived material can be inexpensively and easily available by cracking raw materials collected from animals or plants (e.g., castor oil-derived ricinoleic acid).

The amount of the structural unit derived from n-heptyl (meth)acrylate in the acrylic copolymer is not limited. The lower limit thereof is preferably 25% by weight.

When the amount of the structural unit derived from n-heptyl (meth)acrylate is 25% by weight or more, the adhesive composition can have higher adhesion to smooth surfaces and rough surfaces. When the amount of the structural unit derived from n-heptyl (meth)acrylate is 25% by weight or more and the n-heptyl (meth)acrylate of the structural unit derived from n-heptyl (meth)acrylate contains a bio-derived material, the adhesive composition as a whole can have a higher bio-derived material content. The lower limit of the amount of the structural unit derived from n-heptyl (meth)acrylate is more preferably 48% by weight, still more preferably 60% by weight, further more preferably 70% by weight, still further preferably 80% by weight.

The upper limit of the amount of the structural unit derived from n-heptyl (meth)acrylate is not limited, and may be 100% by weight. However, the upper limit is preferably 99% by weight, more preferably 97% by weight, because the acrylic copolymer preferably also contains a structural unit derived from a crosslinkable functional group-containing monomer, for example.

The amount of the structural unit derived from n-heptyl (meth)acrylate in the acrylic copolymer can be determined by performing mass spectroscopy and $^{1}$H-NMR measurement of the acrylic copolymer and calculating the amount of the structural unit from the integrated intensity ratio of a peak of hydrogen derived from n-heptyl (meth)acrylate.

The acrylic copolymer preferably further contains a structural unit derived from a crosslinkable functional group-containing monomer.

The acrylic copolymer containing a structural unit derived from a crosslinkable functional group-containing monomer can increase the cohesive force of the adhesive layer containing the adhesive composition, thus further enhancing adhesion to smooth surfaces and rough surfaces.

The crosslinkable functional group-containing monomer is not limited, and may be a hydroxy group-containing monomer, a carboxy group-containing monomer, a glycidyl group-containing monomer, an amide group-containing monomer, or a nitrile group-containing monomer, for example. For easy adjustment of the gel fraction of the adhesive layer containing the adhesive composition, a hydroxy group-containing monomer and a carboxy group-containing monomer are preferred, and a hydroxy group-containing monomer is more preferred.

Examples of the hydroxy group-containing monomer include hydroxy group-containing acrylic monomers such as 4-hydroxybutyl (meth)acrylate and 2-hydroxyethyl (meth)acrylate. Examples of the carboxy group-containing monomer include carboxy group-containing acrylic monomers such as (meth)acrylic acid. Examples of the glycidyl group-containing monomer include glycidyl group-containing acrylic monomers such as glycidyl (meth)acrylate. Examples of the amide group-containing monomer include amide group-containing acrylic monomers such as hydroxyethyl (meth)acrylamide, isopropyl (meth)acrylamide, and dimethylaminopropyl (meth)acrylamide. Examples of the nitrile group-containing monomer include nitrile group-containing acrylic monomers such as (meth)acrylonitrile.

These crosslinkable functional group-containing monomers may be used alone or in combination of two or more thereof.

The amount of the structural unit derived from a crosslinkable functional group-containing monomer in the acrylic copolymer is not limited. The lower limit thereof is preferably 0.01% by weight, and the upper limit thereof is preferably 20% by weight. When the amount of the structural unit derived from a crosslinkable functional group-containing monomer is within the range, the adhesive composition has higher adhesion to smooth surfaces and rough surfaces. The lower limit of the amount of the structural unit derived from a crosslinkable functional group-containing monomer is more preferably 0.1% by weight, and the upper limit thereof is more preferably 10% by weight. The lower limit is still more preferably 0.5% by weight, and the upper limit is still more preferably 5% by weight.

The amount of the structural unit derived from a crosslinkable functional group-containing monomer in the acrylic copolymer can be determined by performing mass spectroscopy and $^1$H-NMR measurement of the acrylic copolymer and calculating the amount of the structural unit from the integrated intensity ratio of peaks of hydrogen derived from each monomer.

For the adhesive composition of the present invention, the present inventors made studies to further improve holding power that prevents peeling even when stress is applied (particularly, shear holding power that prevents peeling even when stress is applied in a shear direction) and repulsion resistance that prevents peeling even when stress, such as that caused by deformation of an adherend, is applied. In the course of the studies, the inventors found out that although adjusting the amount of the structural unit derived from a crosslinkable functional group-containing monomer (particularly the hydroxy group-containing monomer) increases the cohesive force of the adhesive layer containing the adhesive composition and thereby improves holding powder and repulsion resistance, simply adjusting the amount of the structural unit does not sufficiently improve holding powder and repulsion resistance.

To solve the situation, the present inventors found out that adjusting a value X represented by the following equation (1), which is related to the hydroxy group content per molecule chain of the acrylic copolymer, to a specific range can provide excellent holding powder and excellent repulsion resistance. Specifically, the acrylic copolymer preferably has a value X represented by the following equation (1) of 2 or greater and 50 or smaller.

[Math. 1]

$$X = \left( \mathrm{Mw}_{polymer} \right) \times \frac{W_{OH}}{W_{total}} \times \frac{n}{M_{OH}} \qquad (1)$$

In the formula (1), $Mw_{polymer}$ represents the weight average molecular weight of the acrylic copolymer, $W_{OH}$ represents the amount (part or parts by weight) of the structural unit derived from the hydroxy group-containing monomer in the acrylic copolymer, $W_{total}$ represents the amount (parts by weight) of all monomers constituting the acrylic copolymer, $M_{OH}$ represents the molecular weight of the hydroxy group-containing monomer, and n represents the hydroxy value of the hydroxy group-containing monomer. For an acrylic copolymer containing structural units derived from two or more types of hydroxy group-containing monomers, the value X is calculated by determining the value X for each monomer and summing up the resulting values.

The value X is related to the hydroxy group content per molecule chain of the acrylic copolymer. The acrylic copolymer having a value X of 2 or greater has an increased number of crosslinkable functional groups per molecule chain, which makes it easy to prepare an adhesive composition having excellent holding powder. The acrylic copolymer having a value X of 50 or smaller makes it easy to adjust the gel fraction and the degree of crosslinking of the adhesive layer containing the adhesive composition, which as a result makes it easy to prepare an adhesive composition having excellent holding powder and excellent repulsion resistance. The lower limit of the value X is more preferably 5, and the upper limit thereof is more preferably 30, still more preferably 26.9, further more preferably 20.

The value X may be adjusted by any method. Examples thereof include a method of selecting the type of the hydroxy group-containing monomer and adjusting the amount of the monomer, and a method of adjusting the weight average molecular weight of the acrylic copolymer.

Specific examples of a method of increasing the value X include a method of increasing the weight average molecular weight of the acrylic copolymer, a method of increasing the amount of the hydroxy group-containing monomer, a method of decreasing the molecular weight of the hydroxy group-containing monomer, and a method of increasing the hydroxy value of the hydroxy group-containing monomer. Specific examples of a method of decreasing the value X include a method of decreasing the weight average molecular weight of the acrylic copolymer, a method of decreasing the amount of the hydroxy group-containing monomer, a method of increasing the molecular weight of the hydroxy group-containing monomer, and a method of decreasing the hydroxy value of the hydroxy group-containing monomer.

The acrylic copolymer may contain a structural unit derived from a different monomer other than the structural unit derived from n-heptyl (meth)acrylate and the structural unit derived from a crosslinkable functional group-containing monomer.

The different monomer is not limited. Examples thereof include alkyl (meth)acrylates.

Examples of the alkyl (meth)acrylates include methyl (meth)acrylate, ethyl (meth)acrylate, propyl (meth)acrylate, n-butyl (meth)acrylate, tert-butyl (meth)acrylate, 2-ethylhexyl (meth)acrylate, n-octyl (meth)acrylate, isooctyl (meth)acrylate, n-nonyl (meth)acrylate, isononyl (meth)acrylate, myristyl (meth)acrylate, cetyl (meth)acrylate, stearyl (meth)acrylate, an ester of 5,7,7-trimethyl-2-(1,3,3-trimethylbutyl)octanol-1 and (meth)acrylic acid, an ester of (meth)acrylic acid and an alcohol having one or two methyl groups in a linear main chain and having a total carbon number of 18, behenyl (meth)acrylate, and arachidyl (meth)acrylate. These alkyl (meth)acrylates may be used alone or in combination of two or more thereof.

Examples of the different monomer also include cyclohexyl (meth)acrylate, isobornyl (meth)acrylate, benzyl (meth)acrylate, 2-butoxyethyl (meth)acrylate, 2-phenoxyethyl (meth)acrylate, tetrahydrofurfuryl (meth)acrylate, and polypropylene glycol mono(meth)acrylate. Examples of the different monomer also include various monomers used for common acrylic polymers, such as vinyl carboxylate (e.g., vinyl acetate) and styrene. These different monomers may be used alone or in combination of two or more thereof.

In particular, the different monomer is preferably at least one monomer selected from the group consisting of tetrahydrofurfuryl (meth)acrylate, isobornyl (meth)acrylate, cyclohexyl (meth)acrylate, tert-butyl (meth)acrylate, benzyl (meth)acrylate, and 2-phenoxyethyl (meth)acrylate. The presence of a structural unit derived from any of these monomers allows the adhesive composition to have improved adhesion to resin adherends made of, for example, polycarbonate. Moreover, the presence of a structural unit derived from any of these monomers allows the adhesive composition to have higher adhesion to smooth surfaces and rough surfaces. Among the above monomers, the different monomer is more preferably at least one monomer selected from the group consisting of tetrahydrofurfuryl (meth)acrylate and isobornyl (meth)acrylate because tetrahydrofurfuryl (meth)acrylate and isobornyl (meth)acrylate can be obtained from bio-derived materials and thus it is easy to increase the bio-derived carbon content described later.

The amount of the structural unit derived from at least one monomer selected from the group consisting of tetrahydrofurfuryl (meth)acrylate and isobornyl (meth)acrylate in the acrylic copolymer is not limited. The lower limit thereof is preferably 1% by weight, and the upper limit thereof is preferably 40% by weight. When the amount of the structural unit is 1% by weight or more, the adhesive composition has higher adhesion to resin adherends made of, for example, polycarbonate. Moreover, when the amount of the structural unit is 1% by weight or more, the adhesive composition has higher adhesion to smooth surfaces and rough surfaces. When the amount of the structural unit is 40% by weight or less, the acrylic copolymer has a decreased glass transition temperature (Tg), which improves the conformability to irregularities of the adhesive layer containing the adhesive composition, leading to higher adhesion particularly to rough surfaces. The lower limit of the structural unit derived from at least one monomer selected from the group consisting of tetrahydrofurfuryl (meth)acrylate and isobornyl (meth)acrylate is more preferably 5% by weight, still more preferably 10% by weight. The upper limit of the amount of the structural unit derived from at least one monomer selected from the group consisting of tetrahydrofurfuryl (meth)acrylate and isobornyl (meth)acrylate is more preferably 30% by weight, still more preferably 25% by weight. The upper limit is further more preferably 20% by weight.

The acrylic copolymer may contain a structural unit derived from a (meth)acrylate having an alkyl group having a carbon number of 8 or greater.

The (meth)acrylate having an alkyl group having a carbon number of 8 or greater is not limited. Examples of such a (meth)acrylate among the above-mentioned (meth)acrylates include 2-ethylhexyl (meth)acrylate, n-octyl (meth)acrylate, isooctyl (meth)acrylate, n-nonyl (meth)acrylate, isononyl (meth)acrylate, myristyl (meth)acrylate, cetyl (meth)acrylate, stearyl (meth)acrylate, an ester of 5,7,7-trimethyl-2-(1,3,3-trimethylbutyl)octanol-1 and (meth)acrylic acid, an ester of (meth)acrylic acid and an alcohol having one or two methyl groups in a linear main chain and having a total carbon number of 18, behenyl (meth)acrylate, and arachidyl (meth)acrylate.

The amount of the structural unit derived from a (meth)acrylate having an alkyl group having a carbon number of 8 or greater in the acrylic copolymer is not limited. The upper limit thereof is preferably 50% by weight. When the amount of the structural unit derived from a (meth)acrylate having an alkyl group having a carbon number of 8 or greater is 50% by weight or less, the adhesive composition has higher adhesion to smooth surfaces and rough surfaces. The upper limit of the amount of the structural unit derived from a (meth)acrylate having an alkyl group having a carbon number of 8 or greater is more preferably 48.5% by weight, still more preferably 40% by weight, further more preferably 30% by weight.

The lower limit of the amount of the structural unit derived from a (meth)acrylate having an alkyl group having a carbon number of 8 or greater is not limited, and may be 0% by weight. When the acrylic copolymer contains the structural unit derived from a (meth)acrylate having an alkyl group having a carbon number of 8 or greater, the lower limit of the amount of the structural unit is preferably 1% by weight, more preferably 5% by weight.

The amount of the structural unit derived from at least one monomer selected from the group consisting of tetrahydrofurfuryl (meth)acrylate and isobornyl (meth)acrylate in the acrylic copolymer can be determined by performing mass spectroscopy and $^1$H-NMR measurement of the acrylic copolymer and calculating the amount of the structural unit from the integrated intensity ratio of peaks of hydrogen derived from each monomer. The amount of the structural unit derived from a (meth)acrylate having an alkyl group having a carbon number of 8 or greater in the acrylic copolymer also can be determined by performing mass spectroscopy and $^1$H-NMR measurement of the acrylic copolymer and calculating the amount of the structural unit from the integrated intensity ratio of peaks of hydrogen derived from each monomer.

The crosslinkable functional group-containing monomer and the different monomer preferably contain a bio-derived material, but may consist of a petroleum-derived material.

Theoretically, all the acrylic monomers of the acrylic copolymer may be monomers containing a bio-derived material. From the viewpoint of the cost and production efficiency of the adhesive composition, a comparatively inexpensive, easily available monomer containing a bio-derived material may be used, and this monomer may be used in combination with a monomer consisting of a petroleum-derived material.

The acrylic copolymer may have any glass transition temperature (Tg), and may preferably have a glass transition temperature (Tg) of -20°C or lower. The acrylic copolymer having a glass transition temperature (Tg) of - 20°C or lower improves the conformability to irregularities of the adhesive layer containing the adhesive composition, leading to higher adhesion particularly to rough surfaces. The glass transition temperature (Tg) of the acrylic copolymer is more preferably -30°C or lower, still more preferably -40°C or lower, further more preferably -50°C or lower. The lower limit of the glass transition temperature (Tg) of the acrylic copolymer is not limited, and is usually -90°C or higher, preferably -80°C or higher.

The glass transition temperature (Tg) of the acrylic copolymer can be measured by differential scanning calorimetry, for example.

The acrylic copolymer may have any weight average molecular weight. The lower limit thereof is preferably 200,000, and the upper limit thereof is preferably 2,000,000. The acrylic copolymer having a weight average molecular weight within the range allows the adhesive composition to have higher adhesion to smooth surfaces and rough surfaces. The lower limit of the weight average molecular weight of the acrylic copolymer is more preferably 400,000, and the upper limit thereof is more preferably 1,800,000. The lower limit is still more preferably 500,000, and the upper limit is still more preferably 1,500,000.

The weight average molecular weight is a standard polystyrene equivalent weight average molecular weight determined by gel permeation chromatography (GPC) measurement. Specifically, the acrylic copolymer is diluted 50-fold with tetrahydrofuran (THF). The obtained dilution was filtered through a filter (material: polytetrafluoroethylene, pore size: 0.2 μm) to prepare a measurement sample. Next, this measurement sample is fed to a gel permeation chromatograph (produced by Waters, product name "2690 Separations Model" or its equivalent product), and subjected to GPC measurement at a sample flow rate of 1 mL/min and a column temperature of 40°C. The polystyrene equivalent molecular weight of the acrylic copolymer is measured and this value is used as the weight average molecular weight of the acrylic copolymer.

The acrylic copolymer can be obtained by radical reaction of a monomer mixture as a raw material in the presence of a polymerization initiator.

Any radical reaction method may be used. Examples of the polymerization method include living radical polymerization and free radical polymerization. Living radical polymerization can produce a copolymer having a more uniform molecular weight and a more uniform composition compared with free radical polymerization, and can reduce formation of low molecular weight components and the like. This increases the cohesive force of the adhesive layer containing the adhesive composition, leading to higher adhesion to smooth surfaces and rough surfaces.

The polymerization method is not limited and a conventionally known method may be used. Examples thereof include solution polymerization (boiling point polymerization or constant temperature polymerization), UV polymerization, emulsion polymerization, suspension polymerization, and bulk polymerization. Preferred among these are solution polymerization and UV polymerization because these methods allow the adhesive composition to have higher adhesion to smooth surfaces and rough surfaces. More preferred is solution polymerization because the resulting acrylic copolymer is easily mixed with a tackifier resin, allowing the adhesive composition to have even higher adhesion.

In the case of using solution polymerization as the polymerization method, examples of a reaction solvent include ethyl acetate, toluene, methyl ethyl ketone, dimethyl sulfoxide, ethanol, acetone, and diethyl ether. These reaction solvents may be used alone or in combination of two or more thereof.

The polymerization initiator is not limited. Examples thereof include organic peroxides and azo compounds. Examples of the organic peroxides include 1,1-bis(t-hexylperoxy)-3,3,5-trimethylcyclohexane, t-hexyl peroxypivalate, t-butyl peroxypivalate, 2,5-dimethyl-2,5-bis(2-ethylhexanoylperoxy)hexane, t-hexyl peroxy-2-ethylhexanoate, t-butyl peroxy-2-ethylhexanoate, t-butyl peroxyisobutyrate, t-butyl peroxy-3,5,5-trimethylhexanoate, and t-butyl peroxylaurate. Examples of the azo compounds include azobisisobutyronitrile and azobiscyclohexanecarbonitrile. These polymerization initiators may be used alone or in combination of two or more thereof.

Examples of the polymerization initiator for living radical polymerization include organotellurium polymerization initiators. Any organotellurium polymerization initiator usually used in living radical polymerization may be used. Examples thereof include organotellurium compounds and organotelluride compounds. Here, also in living radical polymerization, an azo compound may be used as a polymerization initiator in addition to the organotellurium polymerization initiator so as to promote the polymerization rate.

The adhesive composition of the present invention preferably does not contain a surfactant. The adhesive composition not containing a surfactant can have higher adhesion to smooth surfaces and rough surfaces.

For the adhesive composition of the present invention not to contain a surfactant, preferably, no surfactant is used in production of the acrylic copolymer. For that, a method such as solution polymerization or UV polymerization may be used as the polymerization method for producing the acrylic copolymer, for example.

Here, that the adhesive composition of the present invention does not contain a surfactant means that the adhesive composition of the present invention has a surfactant content of 3% by weight or less, preferably 1% by weight or less.

The surfactant content can be determined by measurement on the adhesive composition using a liquid chromatography mass spectrometer (e.g., NEXCERA produced by Shimadzu Corporation or Exactive produced by Thermo Fisher Scientific), for example. Specifically, a solution of the adhesive composition in ethyl acetate is filtered through a filter (material: polytetrafluoroethylene, pore size: 0.2 $\mu$m). The obtained filtrate (about 10 $\mu$L) is injected to a liquid chromatography mass spectrometer for analysis under the conditions below. The surfactant content can be determined from the area ratio of a peak corresponding to the surfactant in the adhesive composition. For analysis, samples in which the adhesive composition has a known surfactant content are preferably prepared for each type of surfactant to form calibration curves that show the relation between the surfactant content and the peak area ratio.

Column: Hypersil GOLD (2.1 × 150 mm) produced by Thermo Fisher Scientific
Mobile phase: acetonitrile
Column temperature: 40°C
Flow rate: 1.0 mL/min
Ionization method: ESI
Capillary temperature: 350°C

The adhesive composition of the present invention preferably further contains a cross-linking agent so as to appropriately adjust the gel fraction.

The cross-linking agent is not limited. Examples thereof include isocyanate cross-linking agents, aziridine cross-linking agents, epoxy cross-linking agents, and metal chelate cross-linking agents. Preferred among these are isocyanate cross-linking agents because they enable the adhesive composition to have excellent adhesiveness to adherends.

The amount of the cross-linking agent in the adhesive composition of the present invention is not limited. The lower limit thereof relative to 100 parts by weight of the acrylic copolymer is preferably 0.05 parts by weight, and the upper limit thereof is preferably 7 parts by weight. When the amount of the cross-linking agent is within the range, the gel fraction of the adhesive layer containing the adhesive composition can be appropriately adjusted, leading to higher adhesion to smooth surfaces and rough surfaces. The lower limit of the amount of the cross-linking agent is more preferably 0.1 parts by weight, and the upper limit thereof is more preferably 5 parts by weight.

Here, the amount of the cross-linking agent refers to the amount of the solids of the cross-linking agent.

The adhesive composition of the present invention preferably further contains a tackifier resin. The adhesive composition containing a tackifier resin has higher adhesion to smooth surfaces and rough surfaces.

The tackifier resin is not limited. Examples thereof include rosin ester tackifier resins, terpene tackifier resins, coumarone indene tackifier resins, alicyclic saturated hydrocarbon tackifier resins, C5 petroleum tackifier resins, C9 petroleum tackifier resins, and C5-C9 copolymerized petroleum tackifier resins. These tackifier resins may be used alone or in combination of two or more thereof. In particular, the tackifier resin is preferably at least one selected from the group consisting of rosin ester tackifier resins and terpene tackifier resins.

Examples of the rosin ester tackifier resins include polymerized rosin ester resins and hydrogenated rosin ester resins. Examples of the terpene tackifier resins include terpene resins and terpene phenol resins.

The rosin ester tackifier resin and the terpene tackifier resin are preferably bio-derived. Examples of bio-derived rosin ester tackifier resins include rosin ester tackifier resins derived from natural resins such as pine resin. Examples of bio-derived terpene tackifier resins include terpene tackifier resins derived from plant essential oils.

The amount of the tackifier resin in the adhesive composition of the present invention is not limited. The lower limit thereof relative to 100 parts by weight of the acrylic copolymer is preferably 10 parts by weight, and the upper limit thereof is preferably 60 parts by weight. When the amount of the tackifier resin is within the range, the adhesive composition has higher adhesion to smooth surfaces and rough surfaces. The lower limit of the amount of the tackifier resin is more preferably 15 parts by weight, and the upper limit thereof is more preferably 50 parts by weight, still more preferably 35 parts by weight.

The adhesive composition of the present invention may contain an additive such as a silane coupling agent, a plasticizer, a softener, a filler, a pigment, or a dye, as needed.

The adhesive composition of the present invention preferably has a bio-derived carbon content of 10% by weight or more. A bio-derived carbon content of 10% by weight or more is an indicator of a "bio-based product". The bio-derived carbon content of 10% by weight or more is preferred for saving petroleum resources or reducing carbon dioxide emissions. The lower limit of the bio-derived carbon content is more preferably 40% by weight or more, still more preferably 60% by weight. The upper limit of the bio-derived carbon content is not limited, and may be 100% by weight.

While bio-derived carbon contains a certain proportion of radioisotope (C-14), petroleum-derived carbon hardly contains C-14. Thus, the bio-derived carbon content can be calculated by measuring the C-14 concentration in the adhesive composition. Specifically, the bio-derived carbon content can be measured in conformity with ASTM D6866-20, a standard widely used in the bioplastics industry.

The present invention also encompasses an adhesive tape including an adhesive layer containing the adhesive composition of the present invention.

The adhesive layer may have any gel fraction. The lower limit thereof is preferably 10% by weight, and the upper limit thereof is preferably 70% by weight. When the gel fraction is within the range, the adhesive layer has improved conformability to irregularities, and thus has higher adhesion particularly to rough surfaces. The lower limit of the gel fraction is more preferably 20% by weight, and the upper limit thereof is more preferably 50% by weight.

The gel fraction is measured as follows.

The adhesive tape is cut to a 20 mm × 40 mm flat rectangular shape to prepare a specimen. The specimen is immersed in ethyl acetate at 23°C for 24 hours, then taken out of the ethyl acetate, and dried at 110°C for 1 hour. The weight of the specimen after drying is measured, and the gel fraction is calculated by the following equation. The specimen includes no release film for protecting the adhesive layer.

$$\text{Gel fraction (\% by weight)} = 100 \times (W_2 - W_0)/(W_1 - W_0)$$

($W_0$: the weight of the substrate, $W_1$: the weight of the specimen before immersion, $W_2$: the weight of the specimen after immersion and drying)

The adhesive tape of the present invention can exhibit excellent adhesion to both smooth surfaces and rough surfaces. The lower limit of the 180° peeling force for glass of the adhesive tape of the present invention measured in conformity with JIS Z 0237:2009 is preferably 5 N/25 mm, more preferably 7 N/25 mm. The upper limit of the 180° peeling force is not limited. The higher the upper limit is, the better, although the upper limit is practically around 25 N/25 mm.

The 180° peeling force for glass is measured in conformity with JIS Z 0237:2009 as follows. First, the adhesive tape is cut to a size of 25 mm wide × 75 mm long to prepare a specimen. This specimen is placed on a glass plate (surface roughness Ra = 0.2 μm, e.g., 2-mm float glass produced by Shenzhen Sun Global Glass) with the adhesive layer facing the glass plate. A 2-kg rubber roller is then moved back and forth once on the specimen at a speed of 300 mm/min to bond the specimen and the glass plate together. The specimen is then left to stand at 23°C and a humidity of 50% for 20 minutes to prepare a test sample. The adhesive tape and the glass of the test sample are peeled apart in the 180° direction at a tensile speed of 300 mm/min under the conditions of 23°C and a humidity of 50% in conformity with JIS Z 0237:2009 to measure adhesion (N/25 mm).

Here, when the adhesive tape is a non-support tape having no substrate or a double-sided adhesive tape having adhesive layers on both surfaces of a substrate, one adhesive layer surface (the side not to be measured) is backed with a polyethylene terephthalate film having a thickness of 23 μm (e.g., FE2002 produced by Futamura Chemical Co., Ltd. or its equivalent product) before the adhesive tape is bonded to the glass plate.

The lower limit of the 180° peeling force for a polycarbonate plate (PC plate) of the adhesive tape of the present invention measured in conformity with JIS Z 0237:2009 is preferably 5 N/25 mm, more preferably 7 N/25 mm. The upper limit of the 180° peeling force is not limited. The higher the upper limit is, the better, although the upper limit is practically around 25 N/25 mm.

The 180° peeling force for a PC plate in conformity with JIS Z 0237:2009 is measured in the same manner as the 180° peeling force for glass. The adherend used is a PC plate (surface roughness Ra = 0.2 μm, PC-1600 produced by C.I. Takiron Corporation, thickness 2 mm, or its equivalent product) instead of a glass plate.

The adhesive layer of the adhesive tape of the present invention may have any thickness. The lower limit thereof is preferably 3 μm, and the upper limit thereof is preferably 300 μm. The adhesive layer having a thickness within the range allows the adhesive composition to have higher adhesion to smooth surfaces and rough surfaces. The lower limit of the thickness of the adhesive layer is more preferably 5 μm, still more preferably 10 μm. The upper limit of the thickness of the adhesive layer is more preferably 200 μm, still more preferably 100 μm.

The adhesive tape of the present invention may be a non-support tape including no substrate, a one-sided adhesive tape including an adhesive layer on one surface of a substrate, or a double-sided adhesive tape including adhesive layers on both surfaces of a substrate.

The substrate is not limited, and may be a conventionally known substrate. To increase the bio-derived material content of the adhesive tape as a whole, a bio-derived substrate is preferably used.

Examples of the bio-derived substrate include films and nonwoven fabrics containing polyesters (PES) such as plant-derived polyethylene terephthalate (PET), plant-derived polyethylene furanoate (PEF), plant-derived polylactic acid (PLA), plant-derived polytrimethylene terephthalate (PTT), plant-derived polybutylene terephthalate (PBT), and plant-derived polybutylene succinate (PBS). Examples also include films and nonwoven fabrics containing plant-derived polyethylene (PE), plant-derived polypropylene (PP), plant-derived polyurethane (PU), plant-derived triacetylcellulose (TAC), plant-derived cellulose, and plant-derived polyamide (PA).

From the viewpoint of substrate strength, the substrate is preferably a film containing PES or a film containing PA. From the viewpoint of heat resistance and oil resistance, the substrate is preferably a film containing PA.

Examples of the constituent of the film containing PA include nylon 11, nylon 1010, nylon 610, nylon 510, and nylon 410, which are made from castor oil, and nylon 56, which is made from cellulose.

To use less new petroleum resources and emit less carbon dioxide to reduce environmental load, the substrate may contain recycled resources. The method for recycling resources may involve, for example, collecting waste of packaging containers, home appliance, automobiles, building materials, or food, or waste generated during production process, and subjecting the recovered material to washing, decontamination, or decomposition by heating or fermentation for reuse as a raw material. Examples of the substrate containing recycled resources include films and non-woven fabrics containing PET, PBT, PE, PP, PA, or the like made from resin recycled from collected plastic. The collected waste may be burned to utilize the heat energy in production of the substrate or raw materials thereof. Fats and oils contained in the collected waste may be added to petroleum, and the fractionated or refined products thereof may be used as raw materials.

The substrate may be a foam substrate to improve compression characteristics.

The foam substrate preferably contains PE, PP and/or PU. To achieve both high flexibility and high strength, the foam substrate more preferably contains PE. Examples of the constituent of the foam substrate containing PE include PE made from sugarcane.

The foam substrate may be produced by any method. A preferred method includes preparing a foamable resin composition containing a foaming agent and a PE resin containing PE made from sugarcane, foaming the foaming agent while extruding the foamable resin composition into a sheet using an extruder, and optionally crosslinking the obtained polyolefin foam.

The foam substrate may have any thickness. The lower limit thereof is preferably 50 $\mu$m and the upper limit thereof is preferably 1,000 $\mu$m. When the thickness of the foam substrate is within this range, the adhesive tape can exhibit high shock resistance while exhibiting high flexibility that allows a close fit to the shape of an adherend in bonding. The upper limit of the thickness of the foam substrate is more preferably 300 $\mu$m.

The lower limit of the total thickness of the adhesive tape of the present invention (the total of the thickness of the substrate and the adhesive layer(s)) is preferably 3 $\mu$m, and the upper limit thereof is preferably 1,200 $\mu$m. The adhesive tape having a total thickness within the range has higher adhesion to smooth surfaces and rough surfaces. The upper limit of the total thickness of the adhesive tape is more preferably 500 $\mu$m.

The adhesive tape of the present invention may be produced by any method, and may be produced by a conventionally known production method. For example, a double-sided adhesive tape may be produced by the following method.

First, the acrylic copolymer and optionally a crosslinking agent, a tackifier, and the like are mixed with a solvent, thereby preparing a solution of an adhesive A. The solution of an adhesive A is applied to a surface of the substrate, and the solvent in the solution is completely removed by drying to form an adhesive layer A. Next, a release film is placed on the adhesive layer A such that the release-treated surface of the release film faces the adhesive layer A.

Then, another release film is provided, and to the release-treated surface of the release film is applied a solution of an adhesive B prepared in the same manner as above. The solvent in the solution is completely removed by drying. Thus, a laminated film including an adhesive layer B formed on a surface of the release film is produced. The obtained laminated film is placed on the rear surface of the substrate on which the adhesive layer A is formed, such that the adhesive layer B faces the rear surface of the substrate. Thus, a laminate is produced. The laminate is pressurized using a rubber roller or the like to provide a double-sided adhesive tape which includes adhesive layers on both surfaces of the substrate and in which the surface of each adhesive layer is covered with a release film.

In another method, two laminated films are produced in the same manner as above. The laminated films are placed on both surfaces of the substrate in such a manner that the adhesive layer of each laminated film faces the substrate, thereby preparing a laminate. The laminate is pressurized using a rubber roller or the like to provide a double-sided adhesive tape which includes adhesive layers on both surface of the substrate and in which the surface of each adhesive layer is covered with a release film.

The adhesive tape of the present invention may be used for any applications. The adhesive tape is preferably used for fixing an electronic device component or an in-vehicle component because the adhesive tape has excellent adhesion to both smooth surfaces and rough surfaces, and if necessary can also have excellent holding powder and repulsion resistance as well as excellent adhesion to resin adherends made of polycarbonate, for example. Specifically, the adhesive tape of the present invention can be suitably used for bonding and fixing of an electronic device component in a large portable electronic device and bonding and fixing of an in-vehicle component (e.g., in-vehicle panel).

The present invention also encompasses a method of fixing an electronic device component or an in-vehicle component including fixing an electronic device component or an in-vehicle component using the adhesive tape of the present invention. The present invention also encompasses a method of producing an electronic device component or an in-vehicle component including the method of fixing an electronic device component or an in-vehicle component of the present invention. These methods enable firmly fixing an electronic device component or an in-vehicle component.

- Advantageous Effects of Invention

The present invention can provide an adhesive composition that can exhibit excellent adhesion to both smooth surfaces and rough surfaces. The present invention can also provide an adhesive tape including an adhesive layer containing the adhesive composition, as well as a method for fixing and a method for producing an electronic device component or an in-vehicle component using the adhesive tape.

BRIEF DESCRIPTION OF DRAWINGS

Fig. 1 is a schematic view illustrating a shear holding power test for an adhesive tape.
Fig. 2 is a schematic view illustrating a repulsion resistance test for an adhesive tape.

DESCRIPTION OF EMBODIMENTS

The embodiments of the present invention are more specifically described in the following with reference to examples. These examples are not intended to limit the present invention.

<n-Heptyl acrylate>

n-Heptyl alcohol (produced by Tokyo Chemical Industry Co., Ltd.) and acrylic acid (produced by Nippon Shokubai Co., Ltd.) were esterified to prepare n-heptyl acrylate.

<1-Methylhexyl acrylate>

2-Heptyl alcohol (produced by Tokyo Chemical Industry Co., Ltd.) and acrylic acid (produced by Nippon Shokubai Co., Ltd.) were esterified to prepare 1-methylhexyl acrylate.

<Other acrylic monomers>

The following commercial monomers were provided.

Butyl acrylate (BA) (produced by Mitsubishi Chemical Corporation)
2-Ethylhexyl acrylate (2-EHA) (produced by Mitsubishi Chemical Corporation)
Acrylic acid (AAc) (produced by Nippon Shokubai Co., Ltd.)
2-Hydroxyethyl acrylate (2-HEA) (produced by Osaka Organic Chemical Industry Ltd.)
Tetrahydrofurfuryl acrylate (THFA)
Isobornyl acrylate (IBOA)

<Cross-linking agent>

A commercial isocyanate cross-linking agent (produced by Tosoh Corporation, Coronate L-45) was provided.

<Tackifier resin>

Commercial bio-derived tackifier resins were provided.

(1) Terpene phenol resin A (produced by Yasuhara Chemical Co., Ltd., G150, softening point: 150°C, bio-derived carbon content 67% by weight)

(2) Polymerized rosin ester resin B (hydroxy value: 46, softening point: 152°C, bio-derived carbon content 95% by weight)

(3) Hydrogenated rosin ester resin C (produced by Arakawa Chemical Industries Ltd., KE359, hydroxy value: 40, softening point: 100°C, bio-derived carbon content 95% by weight)

(Example 1)

(1) Production of acrylic copolymer A (solution polymerization)

A reaction vessel was charged with ethyl acetate as a polymerization solvent and the ethyl acetate was bubbled with nitrogen. The reaction vessel was heated while nitrogen was flowed thereinto, thereby starting reflux. Subsequently, to the reaction vessel was added a polymerization initiator solution prepared by diluting 0.1 parts by weight of azobisisobutyronitrile as a polymerization initiator 10-fold with ethyl acetate. Then, 96.6 parts by weight of the n-heptyl acrylate, 2.9 parts by weight of the acrylic acid, and 0.5 parts by weight of the 2-hydroxyethyl acrylate were added dropwise over two hours. After completion of dropwise addition, the polymerization initiator solution prepared by diluting 0.1 parts by weight of azobisisobutyronitrile as a polymerization initiator 10-fold with ethyl acetate was added again to the reaction vessel, and the polymerization reaction was allowed to proceed for four hours. Thus, a solution containing an acrylic copolymer A was obtained.

The obtained acrylic copolymer A was diluted 50-fold with tetrahydrofuran (THF). The obtained dilution was filtered through a filter (material: polytetrafluoroethylene, pore size: 0.2 $\mu$m), whereby a measurement sample was prepared. This measurement sample was fed into a gel permeation chromatograph (produced by Waters Corporation, 2690 Separations Model) and subjected to GPC measurement at a sample flow rate of 1 mL/min and a column temperature of 40°C to measure the polystyrene equivalent molecular weight of the acrylic copolymer A. Thus, the weight average molecular weight was determined.

(2) Production of adhesive tape

To the obtained solution containing the acrylic copolymer A was added the isocyanate cross-linking agent (produced by Tosoh Corporation, Coronate L-45) such that the amount of the solids of the isocyanate cross-linking agent was 0.2 parts by weight relative to 100 parts by weight of the acrylic copolymer A, whereby an adhesive solution was prepared. The adhesive solution was applied to the release-treated surface of a release-treated PET film having a thickness of 75 $\mu$m such that the adhesive layer after drying would have a thickness of 50 $\mu$m, and then dried at 110°C for five minutes. This adhesive layer was placed on the release-treated surface of a release-treated PET film having a thickness of 75 $\mu$m and left to stand at 40°C for 48 hours, whereby an adhesive tape (non-support type) was obtained.

The release film on one surface of the obtained adhesive tape was removed. The adhesive tape was attached to a PET film having a thickness of 23 $\mu$m (produced by Futamura Chemical Co., Ltd., FE2002) and cut to a 20 mm × 40 mm flat rectangular shape. The release film on the other surface of the adhesive tape was removed, whereby a specimen was prepared. The weight of the specimen was measured. The specimen was immersed in ethyl acetate at 23°C for 24 hours, taken out of the ethyl acetate, and dried at 110°C for 1 hour. The weight of the specimen after drying was measured, and the gel fraction was calculated by the following equation.

$$\texttt{Gel fraction (\% by weight)} = 100 \times (W_2 - W_0)/(W_1 - W_0)$$

($W_0$: the weight of the substrate (PET film), $W_1$: the weight of the specimen before immersion, $W_2$: the weight of the specimen after immersion and drying)

The adhesive layer of the obtained adhesive tape was subjected to measurement with a liquid chromatography mass spectrometer (NEXCERA produced by Shimadzu Corporation or Exactive produced by Thermo Fisher Scientific) to determine the surfactant content.

(Examples 2 to 11 and 13 to 37 and Comparative Examples 1 to 6)

Adhesive tapes were obtained as in Example 1 except that the types and amounts of the acrylic monomers constituting the acrylic copolymer, the weight average molecular weight of the acrylic copolymer, the types and amounts of the tackifier resin and the cross-linking agent were changed as shown in Tables 1 to 4. In Examples 1 and 27 to 37, the value X of each of the obtained acrylic copolymers was calculated using the above equation (1).

As for the tackifier resins, in Examples 10 and 11, 10 parts by weight of the terpene phenol resin A, 14 parts by weight of the polymerized rosin ester resin B, and 10 parts by weight of the hydrogenated rosin ester resin C were used. In Example 14, 2.9 parts by weight of the terpene phenol resin A, 4.2 parts by weight of the polymerized rosin ester resin B, and 2.9 parts by weight of the hydrogenated rosin ester resin C were used. In Example 15, 4.4 parts by weight of the terpene phenol resin A, 6.2 parts by weight of the polymerized rosin ester resin B, and 4.4 parts by weight of the hydrogenated rosin ester resin C were used. In Example 16, 14.7 parts by weight of the terpene phenol resin A, 20.6 parts by weight of the polymerized rosin ester resin B, and 14.7 parts by weight of the hydrogenated rosin ester resin C were used. In Example 17, 17.6 parts by weight of the terpene phenol resin A, 24.8 parts by weight of the polymerized rosin ester resin B, and 17.6 parts by weight of the hydrogenated rosin ester resin C were used.

(Example 12)

(1) Production of acrylic copolymer B (emulsion polymerization)

An amount of 100 parts by weight of a mixture of acrylic monomers shown in Table 1 to constitute the acrylic copolymer B was put in a separate container in advance. To the monomer mixture were added 5.8 parts by weight of polyoxyethylene nonyl phenyl ether sodium sulfate (produced by Kao Corp., LEVENOL WZ) and 57 parts by weight of deionized water, followed by stirring, whereby an emulsion of the monomer mixture was prepared.

Separately, 40 parts by weight of deionized water and 0.2 parts by weight of polyoxyethylene nonyl phenyl ether sodium sulfate were added to a reaction vessel, nitrogen was flowed thereinto, and the inner temperature was increased to 80°C. Thereafter, 4 parts by weight of an aqueous potassium persulfate solution having a concentration of 5% was added to the reaction vessel. The emulsion of the monomer mixture prepared in advance was added dropwise into the reaction vessel over three hours, and concurrently 4 parts by weight of an aqueous potassium persulfate solution having a concentration of 5% was added dropwise, to perform emulsion polymerization at an internal temperature of 80°C to 83°C. After completion of dropwise addition, the reaction solution was maintained at the same temperature for three hours, and then cooled to room temperature. The reaction solution was adjusted to a pH of 7.5 by adding 25% aqueous ammonia, whereby an emulsified copolymer having an average particle size of 210 nm was obtained.

To the obtained solution containing the emulsified copolymer were added an alkali-thickening type acrylic thickener (produced by Saiden Chemical Industry Co., Ltd., SAIVINOL AZ-1), 25% aqueous ammonia, and deionized water, whereby an solution containing an acrylic copolymer B was obtained. The solution had a solid concentration of 50%, a viscosity of 3,500 mPa·s, and a pH of 8.0.

The weight average molecular weight of the obtained acrylic copolymer B was unable to be measured.

(2) Production of adhesive tape

An adhesive tape was obtained as in Example 1 except that the obtained acrylic copolymer B was used. The gel fraction and the surfactant content were determined as in Example 1.

<Evaluation>

The adhesive tapes obtained in the examples and comparative examples were evaluated by the following methods. Tables 1 to 4 show the results.

(1) Peeling force for smooth surface

The 180° peeling force of each of the adhesive tapes for glass as a smooth surface was measured in conformity with JIS Z 0237:2009.

Specifically, first, one surface (the side not to be measured) of the adhesive tape was backed with a polyethylene terephthalate film having a thickness of 23 μm (produced by Futamura Chemical Co., Ltd., FE2002) and then the adhesive tape was cut to a size of 25 mm wide × 75 mm long to prepare a specimen. This specimen was placed on a glass plate (surface roughness Ra = 0.2 μm, 2-mm float glass produced by Shenzhen Sun Global Glass) with the adhesive layer (the side to be measured) facing the glass plate. A 2-kg rubber roller was then moved back and forth once on the specimen at a speed of 300 mm/min to bond the specimen and the glass plate together. The specimen was then left to stand at 23°C and a humidity of 50% for 20 minutes to prepare a test sample. The adhesive tape and the glass of the test sample are peeled apart in the 180° direction at a tensile speed of 300 mm/min under the conditions of 23°C and a humidity of 50% in conformity with JIS Z 0237:2009 to measure adhesion (N/25 mm).

(2) Peeling force for rough surface

The 180° peeling force of each of the adhesive tapes for water-proof abrasive paper (produced by Noritake Coated Abrasive Co., Ltd., C947H, grain size 360, surface roughness Ra = 10.8 μm) as a rough surface was measured in conformity with JIS Z 0237:2009.

Specifically, first, the back surface of the water-proof abrasive paper was bonded to a SUS304 plate using an adhesive tape (produced by Sekisui Chemical Co., Ltd., #560). Next, one surface (the side not to be measured) of the adhesive tape was backed with a polyethylene terephthalate film having a thickness of 23 μm (produced by Futamura Chemical Co., Ltd., FE2002) and then the adhesive tape was cut to a size of 25 mm wide × 75 mm long to prepare a specimen. This specimen was placed on the abrasive surface of the water-proof abrasive paper bonded to the SUS304 plate, with its adhesive layer (the side to be measured) facing the abrasive surface. A 2-kg rubber roller was then moved back and forth once on the specimen at a speed of 300 mm/min to bond the specimen and the abrasive paper together. The specimen was then left to stand at 23°C and a humidity of 50% for 20 minutes to prepare a test sample. The adhesive tape and the glass of the test sample are peeled apart in the 180° direction at a tensile speed of 300 mm/min in conformity with JIS Z 0237 to measure adhesion (N/25 mm) at 23°C.

The surface roughness Ra of the water-proof abrasive paper was measured using a laser microscope (produced by KEYENCE, Color 3D Laser Microscope, VK-8710).

(3) Peeling force for polycarbonate plate (PC plate)

The 180° peeling force of each of the adhesive tapes obtained in Examples 1 and 18 to 26 for a polycarbonate plate (PC plate) was measured in conformity with JIS Z 0237:2009.

Specifically, first, one surface (the side not to be measured) of the adhesive tape was backed with a polyethylene terephthalate film having a thickness of 23 μm (produced by Futamura Chemical Co., Ltd., FE2002) and then the adhesive tape was cut to a size of 25 mm wide × 75 mm long to prepare a specimen. This specimen was placed on a PC plate (surface roughness Ra = 0.2 μm, produced by C.I. TAKIRON Corporation, PC-1600, thickness 2 mm) with the adhesive layer (the side to be measured) facing the PC plate. A 2-kg rubber roller was then moved back and forth once on the specimen at a speed of 300 mm/min to bond the specimen and the PC plate together. The specimen was then left to stand at 23°C and a humidity of 50% for 20 minutes to prepare a test sample. The adhesive tape and the glass of the test sample are peeled apart in the 180° direction at a tensile speed of 300 mm/min under the conditions of 23°C and a humidity of 50% in conformity with JIS Z 0237:2009 to measure adhesion (N/25 mm).

(4) Shear holding power test

The adhesive tapes obtained in Examples 1 and 27 to 37 were subjected to a shear holding power test.

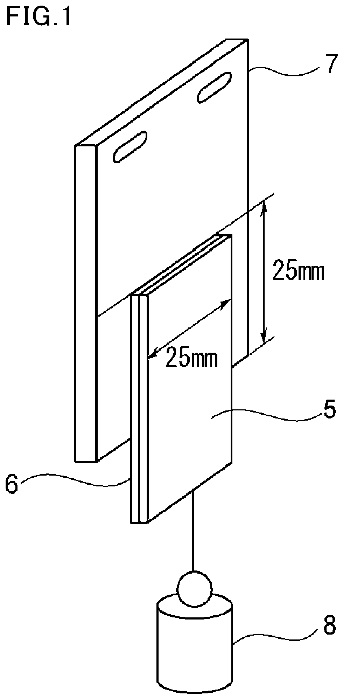

Fig. 1 is a schematic view illustrating a shear holding power test for an adhesive tape.

As illustrated in Fig. 1, a polyethylene terephthalate film 5 having a thickness of 23 μm (produced by Futamura Chemical Co., Ltd., FE2002) and a SUS plate 7 were bonded together using an adhesive tape 6. The bonded area was 25 mm × 25 mm. A 1-kg weight 8 was hung from one end of the polyethylene terephthalate film 5, and the specimen was left to stand at a temperature of 80°C. The amount of slippage of the adhesive tape (the distance the adhesive tape slipped) (mm) after one hour was measured.

(5) Repulsion resistance test

The adhesive tapes obtained in Examples 1 and 27 to 37 were subjected to a repulsion resistance test.

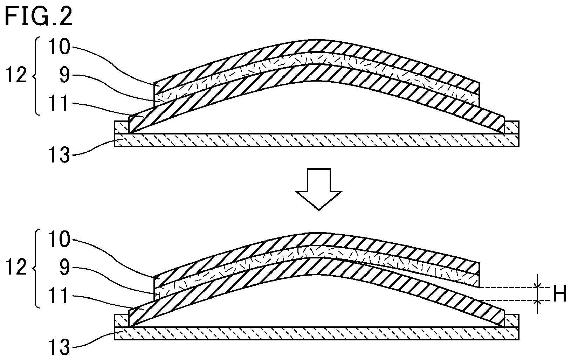

Fig. 2 is a schematic view illustrating a repulsion resistance test for an adhesive tape.

As illustrated in Fig. 2, an adhesive tape 9 was cut to a flat rectangular shape (25 mm wide × 150 mm long) and used to bond an aluminum plate 10 (25 mm wide × 150 mm long × 0.3 mm thick) and a polycarbonate resin plate 11 (25 mm wide × 200 mm long × 1 mm thick). The position of the adhesive tape 9 was adjusted such that the adhesive tape 9 was at the center portion of the polycarbonate resin plate 11 in the longitudinal direction. A 2-kg rubber roller was moved back and forth once on the polycarbonate resin plate 11 at a speed of 300 mm/min. Thus, the polycarbonate resin plate 11 and the aluminum plate 10 were integrated together with the adhesive tape 9 therebetween, and left to stand 23°C for 24 hours to prepare a test sample 12. The test sample 12 was set on a fixture 13 as illustrated in Fig. 2. Bending stress was applied in the vertical direction of the test sample 12 to curve the test sample 12 in an arc shape such that the distance between the two longitudinal edges of the polycarbonate resin plate 11 reached 180 mm. The test sample 12 in this state was put in an 85°C oven and left to stand for 24 hours. The test sample 12 was taken out from the oven while keeping it curved in an arc shape, and the height H (mm) of the partial detachment between the aluminum plate 10 and the polycarbonate resin plate 11 was measured with a caliper.

[Table 1A]

| | | | Example 1 | Example 2 | Example 3 | Example 4 | Example 5 | Example 6 |
|---|---|---|---|---|---|---|---|---|
| Adhesive layer | Acrylic copolymer [parts by weight] | n-Heptyl acrylate | 96.6 | 96.6 | 96.6 | 96.6 | 96.6 | 96.6 |
| | | BA | 0 | 0 | 0 | 0 | 0 | 0 |
| | | 2-EHA | 0 | 0 | 0 | 0 | 0 | 0 |
| | | 1-Methylhexyl acrylate | 0 | 0 | 0 | 0 | 0 | 0 |
| | | AAc | 2.9 | 2.9 | 2.9 | 2.9 | 2.9 | 2.9 |
| | | 2-HEA | 0.5 | 0.5 | 0.5 | 0.5 | 0.5 | 0.5 |
| | Tackifier resin (TF) [parts by weight] | | 0 | 0 | 0 | 0 | 0 | 0 |
| | Cross-linking agent [parts by weight] | | 0.2 | 0.1 | 0.3 | 0.3 | 0.2 | 0.5 |
| | Surfactant [parts by weight] | | 0 | 0 | 0 | 0 | 0 | 0 |
| Mw of acrylic copolymer [$\times 10^4$] | | | 100 | 100 | 100 | 51 | 51 | 51 |
| Gel fraction of adhesive layer [% by weight] | | | 42 | 25 | 61 | 45 | 23 | 68 |
| Evaluation | Peeling force for smooth surface (N/25 mm) | | 8.4 | 8.5 | 8.2 | 9.1 | 9.4 | 8.8 |
| | Peeling force for rough surface (N/25 mm) | | 9.7 | 9.9 | 9.2 | 10.1 | 10.2 | 9.7 |

[Table 1B]

| | | | Example 7 | Example 8 | Example 9 | Example 10 | Example 11 |
|---|---|---|---|---|---|---|---|
| Adhesive layer | Acrylic copolymer [parts by weight] | n-Heptyl acrylate | 48.3 | 72.5 | 48.3 | 96.6 | 48.3 |
| | | BA | 48.3 | 24.1 | 0 | 0 | 48.3 |
| | | 2-EHA | 0 | 0 | 48.3 | 0 | 0 |
| | | 1-Methylhexyl acrylate | 0 | 0 | 0 | 0 | 0 |
| | | AAc | 2.9 | 2.9 | 2.9 | 2.9 | 2.9 |
| | | 2-HEA | 0.5 | 0.5 | 0.5 | 0.5 | 0.5 |
| | Tackifier resin (TF) [parts by weight] | | 0 | 0 | 0 | 34 | 34 |
| | Cross-linking agent [parts by weight] | | 0.2 | 0.2 | 0.2 | 0.5 | 0.5 |
| | Surfactant [parts by weight] | | 0 | 0 | 0 | 0 | 0 |
| Mw of acrylic copolymer [$\times 10^4$] | | | 107 | 98 | 103 | 100 | 107 |
| Gel fraction of adhesive layer [% by weight] | | | 44 | 41 | 39 | 36 | 35 |
| Evaluation | Peeling force for smooth surface (N/25 mm) | | 9.7 | 8.6 | 8.3 | 15.9 | 19.7 |
| | Peeling force for rough surface (N/25 mm) | | 8.9 | 9.3 | 9.2 | 13.8 | 16.9 |

[Table 1C]

| | | | Example 12 | Example 13 | Example 14 | Example 15 | Example 16 | Example 17 |
|---|---|---|---|---|---|---|---|---|
| Adhesive layer | Acrylic copolymer [parts by weight] | n-Heptyl acrylate | 96.6 | 29.0 | 96.6 | 96.6 | 96.6 | 96.6 |
| | | BA | 0 | 67.6 | 0 | 0 | 0 | 0 |
| | | 2-EHA | 0 | 0 | 0 | 0 | 0 | 0 |
| | | 1-Methylhexyl acrylate | 0 | 0 | 0 | 0 | 0 | 0 |
| | | AAc | 2.9 | 2.9 | 2.9 | 2.9 | 2.9 | 2.9 |
| | | 2-HEA | 0.5 | 0.5 | 0.5 | 0.5 | 0.5 | 0.5 |
| | Tackifier resin (TF) [parts by weight] | | 0 | 0 | 10 | 15 | 50 | 60 |
| | Cross-linking agent [parts by weight] | | 0 | 0.2 | 0.3 | 0.4 | 0.6 | 0.7 |
| | Surfactant [parts by weight] | | 6 | 0 | 0 | 0 | 0 | 0 |
| Mw of acrylic copolymer [$\times 10^4$] | | | - | 98 | 100 | 100 | 100 | 100 |
| Gel fraction of adhesive layer [% by weight] | | | 45 | 44 | 41 | 44 | 33 | 38 |
| Evaluation | Peeling force for smooth surface (N/25 mm) | | 8.5 | 9.5 | 10.8 | 12.4 | 17.7 | 17.8 |
| | Peeling force for rough surface (N/25 mm) | | 8.6 | 8.8 | 11.4 | 12.2 | 13.1 | 11.3 |

16

EP 4 079 823 A1

[Table 2]

| | | | Example 1 | Example 18 | Example 19 | Example 20 | Example 21 | Example 22 | Example 23 | Example 24 | Example 25 | Example 26 |
|---|---|---|---|---|---|---|---|---|---|---|---|---|
| Adhesive layer | Acrylic copolymer [parts by weight] | n-Heptyl acrylate | 96.6 | 95.6 | 91.6 | 86.6 | 76.6 | 71.6 | 66.6 | 56.6 | 86.6 | 66.6 |
| | | BA | 0 | 0 | 0 | 0 | 0 | 0 | 0 | 0 | 0 | 0 |
| | | 2-EHA | 0 | 0 | 0 | 0 | 0 | 0 | 0 | 0 | 0 | 0 |
| | | 1-Methylhexyl acrylate | 0 | 0 | 0 | 0 | 0 | 0 | 0 | 0 | 0 | 0 |
| | | THFA | 0 | 1.0 | 5.0 | 10.0 | 20.0 | 25.0 | 30.0 | 40.0 | 0 | 0 |
| | | IBOA | 0 | 0 | 0 | 0 | 0 | 0 | 0 | 0 | 10.0 | 30.0 |
| | | AAc | 2.9 | 29 | 2.9 | 2.9 | 2.9 | 2.9 | 2.9 | 2.9 | 2.9 | 2.9 |
| | | 2-HEA | 0.5 | 0.5 | 0.5 | 0.5 | 0.5 | 0.5 | 0.5 | 0.5 | 0.5 | 0.5 |
| | Tackifier resin (TF) [parts by weight] | | 0 | 0 | 0 | 0 | 0 | 0 | 0 | 0 | 0 | 0 |
| | Cross-linking agent [parts by weight] | | 0.2 | 0.2 | 0.2 | 0.2 | 0.2 | 0.2 | 0.2 | 0.2 | 0.2 | 0.2 |
| | Surfactant [parts by weight] | | 0 | 0 | 0 | 0 | 0 | 0 | 0 | 0 | 0 | 0 |
| Mw of acrylic copolymer [$\times 10^4$] | | | 100 | 100 | 99 | 97 | 96 | 96 | 95 | 93 | 98 | 94 |
| Gel fraction of adhesive layer [% by weight] | | | 42 | 41 | 38 | 39 | 39 | 37 | 36 | 36 | 39 | 37 |
| Evaluation | Peeling force for smooth surface (N/25 mm) | | 8.4 | 9.5 | 11.4 | 12.5 | 13.4 | 13.8 | 14.1 | 13.2 | 12.5 | 15.1 |
| | Peeling force for rough surface (N/25 mm) | | 9.7 | 10.7 | 11.6 | 12.6 | 13.7 | 13.3 | 11.9 | 9.9 | 13.3 | 10.9 |
| | Peeling force for PC plate (N/25 mm) | | 7.5 | 8.9 | 11.7 | 13.7 | 15.3 | 16.1 | 16.0 | 15.1 | 14.6 | 16.5 |

EP 4 079 823 A1

[Table 3]

| | | | Example 1 | Example 27 | Example 28 | Example 29 | Example 30 | Example 31 | Example 32 | Example 33 | Example 34 | Example 35 | Example 36 | Example 37 |
|---|---|---|---|---|---|---|---|---|---|---|---|---|---|---|
| Adhesive layer | Acrylic copolymer [parts by weight] | n-Heptyl acrylate | 96.6 | 97.09 | 97.07 | 97.05 | 97.04 | 97.09 | 97.0 | 96.8 | 96.5 | 96.3 | 96.5 | 96.6 |
| | | BA | 0 | 0 | 0 | 0 | 0 | 0 | 0 | 0 | 0 | 0 | 0 | 0 |
| | | 2-EHA | 0 | 0 | 0 | 0 | 0 | 0 | 0 | 0 | 0 | 0 | 0 | 0 |
| | | 1-Methyl-hexyl acr-ylate | 0 | 0 | 0 | 0 | 0 | 0 | 0 | 0 | 0 | 0 | 0 | 0 |
| | | AAc | 2.9 | 2.9 | 2.9 | 2.9 | 2.9 | 2.9 | 2.9 | 2.9 | 2.9 | 2.9 | 2.9 | 2.9 |
| | | 2-HEA | 0.5 | 0.01 | 0.03 | 0.05 | 0.06 | 0.01 | 0.1 | 0.3 | 0.6 | 0.8 | 0.6 | 0.5 |
| | Tackifier resin (TF) [parts by weight] | | 0 | 0 | 0 | 0 | 0 | 0 | 0 | 0 | 0 | 0 | 0 | 0 |
| | Cross-linking agent [parts by weight] | | 0.2 | 0.2 | 0.2 | 0.2 | 0.2 | 1.0 | 0.2 | 0.2 | 0.2 | 0.2 | 0.1 | 0.2 |
| | Surfactant [parts by weight] | | 0 | 0 | 0 | 0 | 0 | 0 | 0 | 0 | 0 | 0 | 0 | 0 |
| Mw of acrylic copolymer [x $10^4$] | | | 100 | 102 | 94 | 105 | 101 | 102 | 103 | 104 | 96 | 99 | 96 | 119 |
| Value X | | | 43.1 | 0.9 | 2.4 | 4.5 | 5.2 | 0.9 | 8.9 | 26.9 | 49.6 | 68.2 | 49.6 | 51.2 |
| Gel fraction of adhesive layer [% by weight] | | | 42 | 0 | 5 | 10 | 13 | 0 | 21 | 33 | 48 | 65 | 35 | 53 |

EP 4 079 823 A1

18

| Evaluation | | Example 1 | Example 27 | Example 28 | Example 29 | Example 30 | Example 31 | Example 32 | Example 33 | Example 34 | Example 35 | Example 36 | Example 37 |
|---|---|---|---|---|---|---|---|---|---|---|---|---|---|
| | Peeling force for smooth surface (N/25 mm) | 8.4 | 9.7 | 9.5 | 9.3 | 9.4 | 9.7 | 9.0 | 8.8 | 8.7 | 8.6 | 8.7 | 8.7 |
| | Peeling force for rough surface (N/25 mm) | 9.7 | 10.7 | 10.5 | 10.4 | 10.3 | 10.6 | 10.3 | 9.8 | 9.3 | 9.0 | 9.8 | 9.2 |
| | Amount of slippage in shear holding power test (mm) | 0.3 | Fell | 3.1 | 1.4 | 0.9 | Fell | 0.5 | 0.4 | 0.2 | 0.1 | 0.4 | 0.2 |
| | Partial detatchment height in repulsion resistance test (mm) | 3 | 13 | 0 | 0 | 0 | 11 | 0 | 0 | 5 | 15 | 4 | 12 |

[Table 4]

| | | | Comparative Example 1 | Comparative Example 2 | Comparative Example 3 | Comparative Example 4 | Comparative Example 5 | Comparative Example 6 |
|---|---|---|---|---|---|---|---|---|
| Adhesive layer | Acrylic copolymer [parts by weight] | n-Heptyl acrylate | 0 | 0 | 0 | 0 | 0 | 0 |
| | | BA | 97.0 | 97.0 | 48.3 | 48.3 | 0 | 0 |
| | | 2-EHA | 0 | 0 | 48.3 | 48.3 | 96.6 | 0 |
| | | 1-Methylhexyl acrylate | 0 | 0 | 0 | 0 | 0 | 96.6 |
| | | AAc | 2.9 | 2.9 | 2.9 | 2.9 | 2.9 | 2.9 |
| | | 2-HEA | 0.1 | 0.1 | 0.5 | 0.5 | 0.5 | 0.5 |
| | Tackifier resin (TF) [parts by weight] | | 0 | 0 | 0 | 0 | 0 | 0 |
| | Cross-linking agent [parts by weight] | | 0.5 | 1.0 | 0.3 | 0.2 | 0.3 | 0.3 |
| | Surfactant [parts by weight] | | 0 | 0 | 0 | 0 | 0 | 0 |
| Mw of acrylic copolymer [$\times 10^4$] | | | 55 | 112 | 53 | 91 | 66 | 62 |
| Gel fraction of adhesive layer [% by weight] | | | 47 | 72 | 50 | 46 | 54 | 51 |
| Evaluation | Peeling force for smooth surface (N/25 mm) | | 9.7 | 8.3 | 8.7 | 8.4 | 8.7 | 9.3 |
| | Peeling force for rough surface (N/25 mm) | | 7.9 | 7.7 | 8.1 | 7.8 | 8.4 | 7.5 |

INDUSTRIAL APPLICABILITY

The present invention can provide an adhesive composition that can exhibit excellent adhesion to both smooth surfaces and rough surfaces. The present invention can also provide an adhesive tape including an adhesive layer containing the adhesive composition, as well as a method for fixing and a method for producing an electronic device component or an in-vehicle component using the adhesive tape.

REFERENCE SIGNS LIST

| 5  | polyethylene terephthalate film |
|----|----------------------------------|

5 polyethylene terephthalate film
6 adhesive tape
7 SUS plate
8 weight (1 kg)
9 adhesive tape
10 aluminum plate
11 polycarbonate resin plate
12 test sample
13 fixture

**Claims**

1. An adhesive composition comprising
an acrylic copolymer containing a structural unit derived from n-heptyl (meth)acrylate.

2. The adhesive composition according to claim 1, wherein an amount of the structural unit derived from n-heptyl (meth)acrylate in the acrylic copolymer is 48% by weight or more.

3. The adhesive composition according to claim 1 or 2,
wherein an amount of a structural unit derived from a (meth)acrylate having an alkyl group having a carbon number of 8 or greater in the acrylic copolymer is 50% by weight or less.

4. The adhesive composition according to claim 1, 2, or 3,
wherein the acrylic copolymer further contains a structural unit derived from a crosslinkable functional group-containing monomer.

5. The adhesive composition according to claim 4, wherein an amount of the structural unit derived from a crosslinkable functional group-containing monomer in the acrylic copolymer is 0.01% by weight or more and 20% by weight or less.

6. The adhesive composition according to claim 4 or 5,
wherein the crosslinkable functional group-containing monomer is a hydroxy group-containing monomer, and the acrylic copolymer has a value X represented by the following equation (1) of 2 or greater and 50 or smaller:

$$X = \left( Mw_{polymer} \right) \times \frac{W_{OH}}{W_{total}} \times \frac{n}{M_{OH}} \qquad ( 1 )$$

wherein $Mw_{polymer}$ represents a weight average molecular weight of the acrylic copolymer, $W_{OH}$ represents an amount (part or parts by weight) of the structural unit derived from the hydroxy group-containing monomer in the acrylic copolymer, $W_{total}$ represents an amount (parts by weight) of all monomers constituting the acrylic copolymer, $M_{OH}$ represents a molecular weight of the hydroxy group-containing monomer, and n represents a hydroxy value of the hydroxy group-containing monomer.

7. The adhesive composition according to claim 6,
wherein the value X is 5 or greater and 30 or smaller.

8. The adhesive composition according to claim 1, 2, 3, 4, 5, 6, or 7,
wherein the acrylic copolymer contains a structural unit derived from at least one monomer selected from the group consisting of tetrahydrofurfuryl (meth)acrylate and isobornyl (meth)acrylate, and an amount of the structural unit derived from at least one monomer selected from the group consisting of tetrahydrofurfuryl (meth)acrylate and isobornyl (meth)acrylate in the acrylic copolymer is 1% by weight or more and 40% by weight or less.

9. The adhesive composition according to claim 1, 2, 3, 4, 5, 6, 7, or 8,
wherein the acrylic copolymer has a weight average molecular weight of 200,000 or greater and 2,000,000 or smaller.

10. The adhesive composition according to claim 1, 2, 3, 4, 5, 6, 7, 8, or 9, further comprising a tackifier resin.

11. The adhesive composition according to claim 10, wherein the tackifier resin is at least one selected from the group consisting of a rosin ester tackifier resin and a terpene tackifier resin.

12. The adhesive composition according to claim 1, 2, 3, 4, 5, 6, 7, 8, 9, 10, or 11, which does not contain a surfactant.

13. An adhesive tape comprising
an adhesive layer containing the adhesive composition according to claim 1, 2, 3, 4, 5, 6, 7, 8, 9, 10, 11, or 12.

14. The adhesive tape according to claim 13,
wherein the adhesive layer has a gel fraction of 10% by weight or more and 70% by weight or less.

15. The adhesive tape according to claim 13 or 14, which has a 180° peeling force for glass of 5 N/25 mm or more as measured in conformity with JIS Z 0237:2009.

16. The adhesive tape according to claim 13, 14, or 15, which has a 180° peeling force for a polycarbonate plate of 5 N/25 mm or more as measured in conformity with JIS Z 0237:2009.

17. The adhesive tape according to claim 13, 14, 15, or 16, which is for use in fixing an electronic device component or an in-vehicle component.

18. A method for fixing an electronic device component or an in-vehicle component, comprising
fixing an electronic device component or an in-vehicle component using the adhesive tape according to claim 13, 14, 15, 16, or 17.

19. A method for producing an electronic device component or an in-vehicle component, comprising
the method for fixing an electronic device component or an in-vehicle component according to claim 18.

FIG.1

7

25mm

25mm

5

6

8

FIG.2

## INTERNATIONAL SEARCH REPORT

| International application No. |
| --- |
| PCT/JP2020/047202 |

**A. CLASSIFICATION OF SUBJECT MATTER**
C09J 11/08(2006.01)i; C09J 133/06(2006.01)i; C09J 7/38(2018.01)i
FI: C09J133/06; C09J11/08; C09J7/38
According to International Patent Classification (IPC) or to both national classification and IPC

**B. FIELDS SEARCHED**

Minimum documentation searched (classification system followed by classification symbols)
C09J11/08; C09J133/06; C09J7/38

| Documentation searched other than minimum documentation to the extent that such documents are included in the fields searched | |
| --- | --- |
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 58-046236 B2 (NITTO ELECTRIC IND CO., LTD.) 14 October 1983 (1983-10-14) claims, column 3, line 15 to column 4, line 22, column 7, line 39 to column 8, line 6, examples | 1-7, 9-19 |
| X | JP 7-070534 A (SHOWA DENKO KABUSHIKI KAISHA) 14 March 1995 (1995-03-14) claims, paragraphs [0004], [0008]-[0010], examples | 1-5, 9-16 |
| X | JP 2006-521418 A (LG CHEM, LTD.) 21 September 2006 (2006-09-21) claims, paragraphs [0013], [0026]-[0035], [0038], [0040], examples | 1-7, 9-19 |
| A | JP 2010-506979 A (3M INNOVATIVE PROPERTIES COMPANY) 04 March 2010 (2010-03-04) entire text | 1-19 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 16 February 2021 (16.02.2021) | 22 February 2021 (22.02.2021) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

Information on patent family members

International application No.

PCT/JP2020/047202

| Patent Documents referred in the Report | Publication Date | Patent Family | Publication Date |
|---|---|---|---|
| JP 58-046236 B2 | 14 Oct. 1983 | (Family: none) | |
| JP 7-070534 A | 14 Mar. 1995 | (Family: none) | |
| JP 2006-521418 A | 21 Sep. 2006 | US 2005/0181148 A1 claims, paragraphs [0013], [0032]-[0041], [0044], [0046], examples WO 2005/068521 A1 EP 1706430 A1 KR 10-2005-0076706 A CN 1764679 A | |
| JP 2010-506979 A | 04 Mar. 2010 | US 2008/0087196 A1 entire text WO 2008/046000 A1 EP 2076577 A1 KR 10-2009-0066293 A CN 101517026 A | |

Form PCT/ISA/210 (patent family annex) (January 2015)

**EP 4 079 823 A1**

REFERENCES CITED IN THE DESCRIPTION

**Patent documents cited in the description**

- JP 2015052050 A
- JP 2015021067 A
- JP 2015120876 A